# EUROPEAN PATENT APPLICATION

(11) **EP 2 762 843 A1**
(43) Date of publication of application: **06.08.2014**
(21) Application number: 14152914.9
(22) Date of filing: 28.01.2014
(51) Int. Cl.: G01F 25/00, B01L 3/02, G01F 23/24, G01N 35/10, G01F 23/22

(54) **Calibration system and method**

(30) Priority: 30.01.2013 CH 3692013
(71) Applicant: INTEGRA Biosciences AG, 7205 Zizers (CH)
(72) Inventor: Bächi, Daniel, 9469 Haag (CH)
(74) Representative: Hasler, Erich

(57) **Abstract**

The invention regards a method for calibrating a sample distribution apparatus for distribution of liquid samples (e.g. a hand held pipettor or a pipetting robot). The method comprises the steps of
- transferring a volume of liquid from the sample distribution apparatus to a container with a temperature sensor,
- measuring a first temperature value via the temperature sensor,
- changing the temperature of the liquid in the container,
- measuring a second temperature value via the temperature sensor, and
- determining from the first and second temperature values the volume of the liquid in the container.

## Description

### FIELD OF THE INVENTION

The invention relates to a calibration system and method for calibrating a sample distribution apparatus for distribution of liquid samples, in particular a pipettor with one or more release channels.

### BACKGROUND OF THE INVENTION

Distribution apparatuses are known in the art as useful tools in laboratories. They are mainly used for distributing one or more samples to a target container, for example a plate with a plurality of wells. There are hand-operated dispensers and pipettes including single-channel (having a single release channel) and multichannel (having several release channels) devices as described for example in application US 2009/0274587 A1. Their release channels allow the release and normally also the uptake of fluid samples. Pipettors (also called pipettes) are understood to be devices used to transport a measured volume of liquid. The sample volume, which is released by the device by a single operation, may (substantially) correspond to the sample volume aspirated into the device. However, there are also pipettes that are capable of aspirating a measured volume of liquid and then releasing measured partial volumes (of the aspirated volume) by single operations. In this case the aspirated sample volume corresponds to several release doses and is therefore released stepwise. Pipettes, in particular piston pipettes (preferably according to ISO 8655-2 valid on January 30, 2013), are of particular interest in the context of the calibration method and system of the invention. Fully automated stationary pipetting apparatuses are however also known and may also be the subject of said method. An example is described in US application 2011/0268627 A1. Such automated distribution apparatuses may also have one or more release channels.

Since these distribution apparatuses must be capable of distributing defined volumes of liquid they need to be calibrated regularly to ensure the necessary precision and accuracy. At present, most liquid handling devices are calibrated either by gravimetric (cf. ISO 8655-6) or photometric (cf. ISO 8655-7) methods. Gravimetric calibration includes the use of a precision balance for determining the weight and thus the volume of a liquid sample. Photometric calibration requires adding the liquid sample from the distribution apparatus to a known volume of liquid wherein either the sample or the known volume of liquid is colored. From the resulting absorbance the sample volume can be determined. For both the gravimetric and the photometric method ready to use kits and systems including software are offered but they are also available as a service from device manufacturers and independent service companies.

In a prior art search regarding the present invention conducted by a patent office the following documents were identified: WO2011/078706A2 and GB2460645A. The first published application, WO2011/078706A2, discloses a humidified gases delivery apparatus for assisting a patient's breathing. The invention described therein concerns a different technical field (medical life support machines). Even though a volume of liquid is calculated from a change in temperature no calibration and in particular no calibration of a sample distribution apparatus takes place.

The second application, GB2460645A, concerns a bathtub heater. Again the temperature of a liquid volume is determined from a change in temperature. However, the technical field (bathtubs) is fundamentally different from the one the present invention relates to (sample distribution apparatuses). The term "calibration" is mentioned, however not in the context of one apparatus (calibration system) being used for calibrating another apparatus, in particular not a sample distribution apparatus. The calibration mentioned in GB2460645A regards the bathtub itself.

Thus none of the above mentioned references deal with calibration systems for calibration of sample distribution apparatuses. Instead they describe medical life support machines and bathtubs respectively.

### OBJECT OF THE INVENTION

It is an object of the present invention to provide an alternative calibration method and system. The method and system respectively should be sufficiently precise and accurate for a calibration of the described kind. A further objective is to provide a calibration method that is comparatively inexpensive and easy to apply. Further objects and advantages of the invention are described hereinafter.

### DESCRIPTION OF THE INVENTION

The above mentioned object can be achieved by a method according to claim 1. Inter alia this application discloses a method for calibrating a sample distribution apparatus for distribution of liquid samples, comprising the steps of
- transferring a volume of liquid from the sample distribution apparatus to a container equipped with a temperature sensor,
- measuring a first temperature value, preferably via the temperature sensor,
- changing the temperature of the liquid in the container,
- measuring a second temperature value, preferably via the temperature sensor, and
- determining from the first and second temperature values the volume of the liquid in the container.

The invention also encompasses an apparatus or system for carrying out the said method.

In the following, preferred embodiments of the invention are described. The features mentioned in respect of said embodiments are to be (individually) considered preferred features and they may be implemented individually or in any combination provided such features do not exclude each other.

According to the method described herein, a first temperature value and a second temperature value are measured, preferably via the temperature sensor of the container. The first temperature value may be the ambient temperature and it may be measured via another temperature sensor. It is however preferred that both, the first and second temperature value, are measured by the temperature sensor of the container. If in this document a temperature sensor is mentioned it is thus the temperature sensor of the container, unless indicated otherwise, and if it is mentioned that temperatures are measured this is preferably done via the said temperature sensor. Of course, the measurement of more than these two (first and second) temperature values, for example a set of (for example at least 10, 20, 50, or 100) consecutive temperature values, is also useful and is preferably carried out by the temperature sensor of the container. Alternatively or in addition thereto the first and/or second temperature value may be specific temperature values like the maximum or minimum temperature observed during measurement, the temperature after a specific time (the reference point defining the offset time for time measurement being for example a specific starting temperature or the time of activation or deactivation of the heater), the temperature at the time of maximum temperature increase or decrease etc. Such specific temperature values may be identified directly (e.g. by the temperature sensor) or indirectly (e.g. by mathematical methods). For example, the identification of a maximum or minimum temperature value among a set of measured temperature values may be achieved by determining an approximation function underlying the set of measured temperature values and calculating the derivative thereof).

The temperature sensor is capable of observing a change in temperature of the liquid in the container. The temperature sensor is therefore preferably adapted for and/or arranged relative to the container for achieving this goal. For example, the temperature sensor may be positioned at the container wall (e.g. on the inside or outside of said wall or within the container wall).

The temperature sensor is preferably a resistor, in particular a thermistor, preferably an NTC (negative temperature coefficient) thermistor. The resistor preferably has a resistance (at 25°C) of more than 10, 50, 100, or 1000 Ohm and/or less than 1000, 10000, or 100000 Ohm. A preferred tolerance for the resistor is equal or less than +/- (plus/minus) 10 percent. Furthermore the resistor should have a low mass. The resistance change, in particular the maximum resistance change, depends on the volume of liquid in the container (provided the other parameters used for measurement are unchanged). Thus a resistor allows to determine the volume of liquid.

Alternatively, the temperature sensor may be a camera, in particular an infrared camera. It is preferably positioned above the opening of the container. One or more containers (see below) may be equipped with one camera that is arranged and adapted for measuring the temperatures of one or more individual liquid volumes in said one or more containers. For this purpose the camera may be connected to a control unit (as mentioned below) that is adapted for processing the camera output. Software executed on said control unit may, based on the camera output, identify individual containers and assign individual (liquid) temperature values to said individual containers.

The maximum (positive or negative) change of temperature of the liquid and/or the maximum (positive or negative) change of temperature measured via the temperature sensor is preferably more than 1, 3, or 5 degrees Celsius (°C) and/or less than 10, 20, or 30 degrees Celsius (°C) for aqueous liquids and (additionally) less than 50 degrees Celsius (°C) for oils. The optimum depends on the liquid used for measurement. The amount of liquid evaporating during measurement should be low. Likewise the crosstalk, i.e. the transfer of heat from one container to another, if present, should be low.

According to an embodiment of the invention, in addition to the first and second temperature value at least 1, 5, 10 or 50 additional temperature values are measured by the temperature sensor in the course of one calibration wherein the volume of the liquid in the container is determined from the first and second temperature value and (one more or all of) the said additional temperatures values.

If in this document it is referred to a "temperature" the wording shall preferably encompass one or both of: A temperature in the normal sense of the word and alternatively any physical quantity (for example resistance of a resistor, or electrical conductivity) from which the temperature can be determined or inferred. Preferably, this physical quantity is directly or indirectly dependant on temperature. For the purpose of the invention it is possible to make use of the temperature in the form of such a physical quantity (e.g. resistance) and physical value respectively without first determining the "temperature" in the normal sense of the word.

If in this document it is referred to the "liquid within the container" the wording shall mean the liquid the volume of which is to be determined by the invention provided that the context in which said liquid is mentioned does not indicate another meaning. In this case both meanings are disclosed as alternatives.

Accordingly, a temperature sensor is an instrument that is capable of and/or adapted for measuring the temperature (in the above mentioned meaning) it is exposed to. Preferably, the temperature sensor is a resistor the resistance of which depends on the temperature the sensor is exposed to. Alternatively, the temperature sensor may comprise electrodes for measuring the electrical conductivity of the liquid since the resistance of the liquid changes with temperature. According to a further alternative the temperature sensor may be a radiation sensor (e.g. an infrared camera) that measures the radiation emission of the liquid which is also dependent on temperature.

The volume of liquid transferred from the distribution apparatus to the container preferably has one or more known properties. It is particularly useful if the liquid has a known heat capacity. It may also have a known initial temperature (e.g. ambient temperature or 25°C), etc. In particular, the liquid may be distilled water having a known temperature.

As described, the temperature of the liquid present in the container is changed for determining its volume. The temperature and the change of temperature respectively are monitored by the temperature sensor, for example in the form of the resistance of a resistor or some other physical quantity. The volume of the liquid can be determined from one, two or more measured values obtained by measuring such a physical quantity via the temperature sensor. How the output of the temperature sensor is processed is however secondary. The volume of liquid could be determined using one or more measured values (physical quantity), possibly in combination with the time at which said values were measured. Preferred for determining the volume of liquid is the use of data points that comprise information on a physical quantity (i.e. a measured value; e.g. resistance (Rₓ)) and a time information (tₓ). For this example, the resistance Rₓ would be different at time tₓ for different volumes of liquid, providing a basis for distinguishing and thus measuring the volume of liquid present in the container.

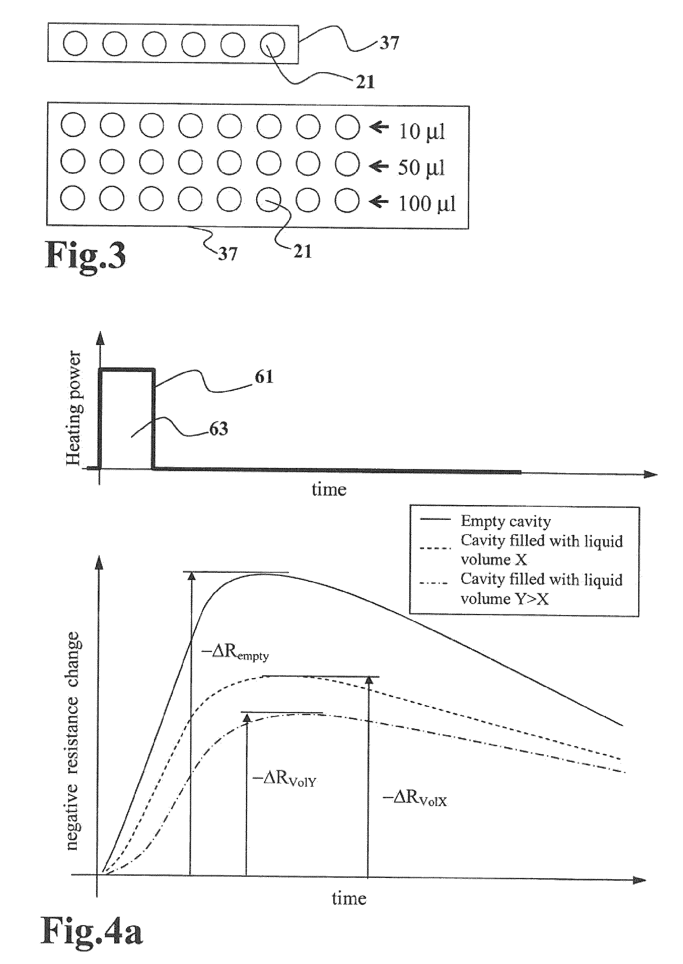

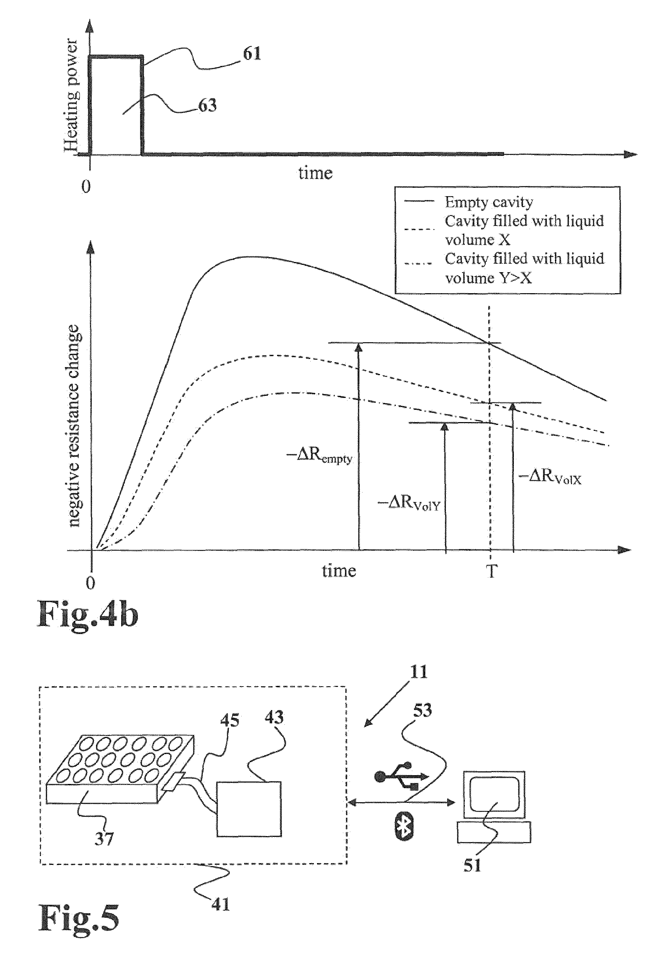

In the course of carrying out the calibration method, the measured values may be related to and/or compared to other measured values or stored values. The volume of liquid may also be determined from a function based on said measured values (or a second function derived from said function, e.g. the first or second derivative thereof), in particular a function of another physical value or parameter, wherein this other physical value or parameter is preferably time (for example ΔR = f(t) as shown in Fig.4). It is further preferred that the function is obtained by determining the functional form underlying a set of measured values or data points by approximation (e.g. using known processes of interpolation, extrapolation, regression analysis, and/ or curve fitting).

It is preferred that a first time value is determined when measuring the first temperature value or when activating or deactivating the heater and that a second time value is determined when measuring the second temperature value. Alternatively or in addition thereto it is preferred that the time between the measurement of the first temperature value (or the activation or deactivation of the heater) and the second temperature value (i.e. the time interval) is measured. If in addition to the first and second temperature values one or more additional temperature values are measured in the course of one calibration it is preferred that for the one or more additional temperature individual time values are determined.

Changing the temperature of the liquid in the container, preferably means increasing the temperature and/or decreasing the temperature. A few preferred examples of how this could be done include:
A) The first temperature value is measured, subsequently the temperature of the liquid is increased and then the second temperature value is measured. Preferably, the heater is used to heat the volume of liquid in the container and while the temperature of the volume of liquid increases the first and then the second temperature value are measured.
B) The first temperature value is measured, subsequently the temperature of the liquid is decreased and then the second temperature value is measured. Preferably, the heater is used to heat the volume of liquid in the container and while the temperature of the volume of liquid decreases (after first having increased and reached peak temperature) the first and then the second temperature value are measured.
C) The first temperature value is measured. Subsequently, the temperature of the liquid is increased and then decreased and the second temperature value is measured. Preferably, the heater is used to heat the volume of liquid in the container and while the temperature of the volume of liquid increases the first temperature value is measured and afterwards while the temperature decreases (after first having increased and reached peak temperature) the second temperature value is measured.

Advantageously, decreasing the temperature of the liquid in the container is achieved passively, i.e. by letting the liquid having a higher than ambient temperature cool down. In other words, after heating the liquid above ambient temperature the heating is stopped and the temperature of the liquid decreases. Alternatively, decreasing the temperature of the liquid in the container is achieved actively, i.e. using a cooling element.

According to an embodiment of the invention either the first temperature value is lower than the second temperature value or the second temperature value is lower than the first temperature value or the first and the second temperature value are equal. The latter is a useful option in the context of example C mentioned above if a further parameter like time is observed. For example, the method can include heating the volume of liquid in the container, measuring the first temperature value (during the temperature increase) and measuring the time until a second temperature value equal to the first temperature value is again measured (after first increasing, reaching peak temperature, and dropping again). Measuring in this way the time between observing the first and the second temperature would allow the use of a very simple temperature sensor. The temperature sensor could be merely a switch that is operated once a specific temperature is reached. The switch could then start and/or stop the clock, i.e. the time measurement. Such a switch could include a shape memory alloy (SMA) that changes its shape at said specific temperature.

It is further preferred that in addition to the temperature sensor the container is equipped with a heater for heating the volume of liquid within the container. In this context the step of changing the temperature of the liquid in the container comprises increasing the temperature of the liquid in the container via the heater. Advantageously, the heater is a resistor, in particular a resistor having a known resistance. The known resistance (at 25°C) is preferably at least 1, 10, or 100 Ohm and/or at most 1000, 10000, or 100000 Ohm. Small resistors are more suitable for the purpose of the invention since a low mass compared to the liquid volume to be measured results in a higher temperature change with a given amount of heating energy. Furthermore, small resistors fit better into or onto a container of small size. Thus a less powerful and thus smaller resistor may be used which is overloaded during heat emission to produce the necessary energy output and heat pulse respectively described in this document.

According to another embodiment, the heater may be an emitter capable of and/ or adapted for emitting electromagnetic radiation, preferably infrared radiation. For example, the heater may be a diode, in particular a semiconductor diode. It is preferred that at least 40, 60, or 80 percent of the energy emitted by the heater is emitted in the form of electromagnetic radiation, in particular infrared radiation.

According to yet another embodiment, the heater may be capable of and/or adapted for heating a fluid (e.g. a gas or liquid, preferably air). The heated fluid has a higher temperature than the container and/or the liquid within the container. A temperature above 25, 35 or 50 degrees Celsius is preferred for the heated fluid. The fluid, after having been heated, is then brought into contact with the container and/or the liquid within the container and heat is transferred from the fluid to the container and/ or the liquid within the container.

Of course the same principle could also be used to cool the liquid within the container. In this case instead of a heater a device is used that cools the fluid or does at least not heat it. The fluid, after optionally having been cooled, has the same or a lower temperature than the container and/or the liquid within the container. A temperature below 25, 20 or 10 degrees Celsius is preferred for the said fluid.

According to an embodiment the fluid flows through the heater or the device as described above and is preferably heated or cooled in the process of flowing through the heater or device.

Convection may be created within the fluid, preferably by the heater or the device as described above. The heater may for example be a convection heating element. It is further preferred that the fluid is transferred from the heater or device as described above to the container, preferably by the said heater or device.

The geometry of the container may be adapted for achieving improved and/or uniform energy transfer from the heater or from the fluid (as described above) to the container and/or to an array of containers (or vice versa if instead of a heater a device as described above is used).

For example the container may comprise on its inner surface or on its outer surface (e.g. at least 1, 3 or 5 and/or less than 100, 50, or 20) protrusions and/or indentations. The inner surface is the one intended and adapted for coming into contact with and/or for holding the liquid within the container. The outer surface is the remaining part of the surface of the container (i.e. the surface of the container that is not the inner surface). A particularly useful part of the outer surface in this context is the (outer) bottom of the container.

The protrusions may for example be surface areas that extend from the container, preferably they are fins.

Said protrusions and indentations preferably increase the rate of heat transfer to or from the container and/or to or from the above mentioned fluid (as compared to a container without such protrusions and indentations). For example, the protrusions or indentations may achieve this by increasing convection. Alternatively, the said protrusions or indentations may simply increase the surface area of the container to thereby facilitate the heat transfer.

Of course, the said protrusions or indentations may be useful in any context in which the container is heated (not just by a fluid and convection as described above), in particular if they are located on the inner surface of the container.

Optionally, the absorption by the container of the energy (preferably in the form of electromagnetic radiation) emitted by the heater is increased. This may be achieved by a container comprising a material that absorbs the energy emitted by the heater efficiently. For example the said material may be capable of and/or adapted for absorbing at least 40, 60 or 80 percent of the said energy coming into contact with the material and/or being intercepted by the material.

It is possible to adjust the electromagnetic radiation emitted by the heater in terms of wavelengths to the absorption spectrum of the said material or vice versa.

The absorbed energy is preferably converted (by the said material) into heat and/or into a temperature increase of the material and/or of the container and/or of the liquid.

The container may comprise such a material in an amount of more than 1, 5, 10, 20 or 40 percent and/or less than 50, 30, 10, or 5 percent (by weight, based on the total weight of the container).

Additionally or alternatively, the material may be capable of and/or adapted for absorbing at least 2, 5, or 10 times the amount of energy (emitted by the heater and coming into contact with and/or being intercepted by the material) that the 40, 60 or 80 percent of the container with lowest absorption in this respect are capable of absorbing (percentages refer to the weight and are based on the total weight of the container).

The described material is preferably arranged so that at least 20, 40 or 60 percent of the energy (preferably in the form of electromagnetic radiation and/or in the form it is emitted by the heater) coming into contact with the container and/ or being intercepted by the container comes into contact with the said material and/ or is intercepted by the said material. For example, the said material may cover an area on the (outer or inner) surface of the container. The said area preferably makes up at least 5, 10, 20 or 30 percent and/or less than 80, 60 or 40 percent of the said (outer or inner) surface. Alternatively or additionally, the said material may be located within the container, for example between the outer and inner surface of the container or within the liquid held by the container. Optionally, the said material may be positioned between the heater and the liquid within the container. Alternatively, the liquid within the container may be positioned between said material and the heater.

Preferably, the (inner or outer surface) bottom of the container is covered with said material or the said material is comprised (for example as an additive) in the substance (preferably a polymer) of which at least 40, 60 or 80 percent (by weight) of the container is made.

In an embodiment in which the said energy is emitted by the heater in the form of heat the said material may optionally correspond to the "material having a high thermal conductivity" as described below.

Alternatively or additionally to the container comprising a material as described above the liquid within the container may comprise such a material. The above mentioned features are in this case also disclosed in a form where the word "container" is replaced by the word "liquid", e.g. the percentages (by weight) disclosed above are also disclosed based on the total weight of the liquid. Furthermore, it is preferred that in this case the said material is in a liquid or gaseous form. For example, the material may be dissolved or dissolvable in the liquid within the container. It is however also conceivable that the material is present in its solid form. For example, the material and the liquid within the container may be capable of forming a dispersion.

According to another embodiment of the invention the method comprises emitting (during the course of one calibration) via the heater a defined amount of energy, preferably in the form of heat or in the form of electromagnetic radiation, thereby increasing the temperature of the liquid in the container. The defined amount of heat emitted is preferably at least 0.5, 1, 3, or 5 Joules and/ or at most 10, 50, 100, or 200 Joules. If the energy is emitted by the heater in the form of electromagnetic radiation the amounts in Joules mentioned above are preferably doubled or tripled. Alternatively or in addition thereto it is advantageous if the heat or the electromagnetic radiation is emitted as one or more pulses preferably (each) having a length of less than 2, 5, or 10 seconds. If more than one pulse is emitted during the course of one calibration, subsequent pulses are preferably separated by intervals during which the heater is switched off and thus the heat or electromagnetic radiation emitted is zero or at least lower or less than during the pulses. (Unless otherwise specified, information is based on one calibration and one volume of liquid and/or one container).

Consequently, the heater is preferably adapted for emitting a defined amount of energy in the form of heat or electromagnetic radiation as described above for increasing the temperature of the liquid in the container.

The volume of liquid transferred from the sample distribution apparatus to the container is preferably at least 1, 50, or 200 microliters and/or at most 250, 1000, or 5000 microliters. The container can be optimized depending on the volume of liquid transferred and/or measured. Advantageously, the area for heat exchange with the liquid should be as big as possible and the mass of the container as compared to the mass of the liquid volume should be as small as possible.

It is preferred that the container has a volume (holding capacity) of less than 0.1, 0.3, 1, or 6 milliliters.

At least 60, 80 or 90 percent of the container (based on the total weight of the container) may be made of one or more polymers (e.g. PE, PP, PS, PET or PVC).

The container preferably has an opening capable of and/or adapted for receiving a part of the distribution apparatus, for example a release channel. The opening may be at the top of the container.

According to another aspect the container may be equipped with a mixer for mixing the volume of liquid and the method may comprise the step of mixing said volume of liquid. This allows for a faster and/or uniform distribution of heat within the volume of liquid which is especially useful for liquid volumes of more than 200, 500, or 1000 microliters.

As described above, the invention also encompasses a calibration apparatus or system, preferably for carrying out the described method.

Preferably, the measurement accuracy and/or the measurement precision of the system and method respectively and/or the maximum error (regarding accuracy and/or precision) achieved is equal to or less than 5 percent for a simple check and less than 2 percent for a full calibration.

According to a preferred embodiment the temperature sensor and/ or the means for changing the temperature of the liquid in the container (e.g. heater) is equipped with or connected to an extension that protrudes from the inner face of the container wall preferably into the volume of liquid within the container. The extension is preferably in contact with the liquid at least on one side, preferably on at least two opposite sides. The said extension may take the form of a rod or plate. Alternatively, the temperature sensor and/or the means for changing the temperature may be equipped with or connected to an extension that partially covers the inner surface of the container wall and/or is part of the container wall in contact with the liquid. Preferably, both the temperature sensor and the means for changing the temperature have each an extension.

The subject matter of the invention does not only encompass the above mentioned calibration system but also parts thereof. Consequently, all features disclosed in respect of such parts of the calibration system (container, container array, temperature sensor, heater, user interface, distribution apparatus, control unit etc.) in the context of the calibration system shall also be disclosed independently, i.e. as independent parts (e.g. a container having the described features, or a calibration system with or without a distribution apparatus).

A preferred calibration system for calibrating a sample distribution apparatus for distribution of liquid samples (in particular a hand held pipettor or a pipetting robot as described) comprises a container, adapted for holding a volume of liquid, the container being equipped with a temperature sensor and a means for changing (in particular: increasing or decreasing) the temperature of the volume of liquid.

Such a calibration system is of particular interest in the context of the present invention if in addition to the temperature sensor the container is equipped with a heater for increasing the temperature of the volume of liquid held within the container.

According to a preferred embodiment the calibration system further comprises a control unit which is connected to (or connectable to) and adapted for controlling the means for changing the temperature of the volume of liquid within the container. In addition it is preferably connected to (or connectable to) and adapted for reading and/or processing the signals of the temperature sensor. The control unit preferably comprises a processing means (preferably a microprocessor) and may be programmable. The control unit is preferably equipped with a communication module (wired or wireless; e.g. USB or Bluetooth) for exchanging data with other devices like a computer or a distribution apparatus for liquid samples or a container array etc.

According to one embodiment of the invention the container is partially or entirely made of a material with a low thermal conductivity. Preferred not only in this context is that the heater and/or the temperature sensor are arranged outside of the container to avoid problems with moisture entering the sensor or heater. According to yet another embodiment the container is made of at least two different materials one having a low thermal conductivity and the other having a high thermal conductivity. The material having a high thermal conductivity is preferably arranged and adapted for facilitating the heat transfer from the heater to the liquid and/or from the liquid to the temperature sensor. The expression "high thermal conductivity" in this context is to be understood to indicate a thermal conductivity that is higher (preferably at least 10, 30, or 100 times higher) than the thermal conductivity of the material with "low thermal conductivity". The material with high thermal conductivity may be made of metal, e.g. aluminum, or plastic filled with powder with high thermal conductivity like alumina (aluminum oxide). The material with low thermal conductivity may be made of plastic, e.g. PE, PP, PS, PET or PVC. The latter prevents or reduces heat loss from and heat introduction into the liquid within the container. If more than one container are connected (see below) it is preferred that the parts connecting the containers are made of material with a low thermal conductivity to reduce heat transfer between containers.

In addition to the container ("the container") one or more additional containers ("the additional container(s)") may be provided. It is preferred, that the steps of the method are performed for the container and one or more of the additional containers and/ or that the calibration system comprises said container and said one or more additional containers. The additional container(s) preferably comprise(s) the same features mentioned in respect of the container. In particular, the additional container(s) may be similar or identical to the container. The container and the one or more additional containers are preferably arranged in fixed positions relative to each other. They may be one-piece and/or formed integrally and/or formed (wholly or partially) within or as part of the same piece of material.

According to a preferred embodiment the container and the additional container(s) constitute a container array, preferably in the form of a plate ("calibration plate"). The container array may take the form of or may comprise a microtiter plate. In this case the receptacles of the microtiter plate constitute the containers mentioned above.

Preferably, a container array comprises per container or per container array a temperature sensor and preferably also a means for changing the temperature of the liquid contained therein (e.g. a heater). The temperature sensors and/or the said means for changing the temperature are preferably connected to and/or addressed via a multiplexing circuit. Especially (but not exclusively) in the context of a container array it is advantageous if the heaters are resistors (optionally carbon printed resistors, preferably in combination with a printed circuit board, or sections with meanders of copper traces, preferably minimum cross section copper traces). Additionally or alternatively a container array may be equipped with a storage device (e.g. an eeprom). Such a storage device could serve different purposes, for example keeping track of the container array history, or serving the storage of heater and/or sensor values. This may be especially useful if as heaters resistors are used that are overloaded during heat emission (so that smaller resistors can be used for the purpose). Overloading may change the characteristics of the resistor over time, thus it would be useful to keep track of its use (e.g. how many times it has been activated).

The sample distribution apparatus used for the method and as preferred part of the calibration system according to the invention is preferably a hand held pipettor, a stationary pipetting robot or a peristaltic pump (single or multichannel) or any liquid handling apparatus. According to an embodiment of the invention the sample distribution apparatus is adapted for holding and transferring the volume of liquid to the container. Transferring the volume of liquid from the sample distribution apparatus to the container may include dispensing via or from the sample distribution apparatus (in particular from the release channel mentioned below) the volume of liquid to the container. It is preferred that the sample distribution apparatus comprises one or more release channels, wherein each of the release channels can be adapted for holding and/or transferring a volume of liquid as described above. If in addition to the container one or more additional containers are provided, the method preferably comprises transferring from one or more of the release channels a volume of liquid to the container and/or to the one or more additional containers, wherein preferably volumes of liquid originating from different release channels are transferred to different containers, resulting in the containers each containing one of the said volumes of liquid. According to a further embodiment the steps of the method for determining the volume within a container are performed in respect of one or more of the said volumes of liquid present in the one or more different containers.

It is further preferred that in the course of one calibration one or several volumes (of different or same size) of liquid are transferred from the same release channel to different containers (preferably at least 5 or 10 different containers). It is further preferred that in the course of one calibration at least two or three differently sized volumes are distributed in this way, for example a first volume V1, a second volume V2, wherein V2 = 0.5*V1, and a third volume V3, wherein V3 = 0.1*V1 (V1, V2 and V3 all being nominal volumes: See below). If the sample distribution apparatus comprises more than one release channel the above said may apply to one or more of the additional release channels.

According to one embodiment of the invention, the sample distribution apparatus comprises controls for setting the volume of liquid to be transferred into and/or out of the distribution apparatus. There is a fixed relationship between the volume set via the controls (the nominal volume, i.e. the volume indicated by the controls) and the volume of liquid actually transferred into and/or out of the distribution apparatus (the transferred volume). This relationship may however not be accurate, i.e. the nominal volume may not correspond precisely to the transferred volume. It is thus preferred that the distribution apparatus comprises means for adjusting the said relationship.

The sample distribution apparatus may be connected to a reservoir via a liquid line. However, it is preferred that before transferring the volume of liquid from (i.e. out of) the sample distribution apparatus to the container, the volume of liquid is transferred (preferably aspirated) into the distribution apparatus (e.g. from a reservoir), as is normal for hand held pipettors. Setting the volume to be transferred into and/or out of the distribution apparatus may thus constitute a step in the described calibration method and is preferably achieved via the above mentioned controls. This may be done once or several times in the course of one calibration (e.g. if different volumes are transferred and determined). The controls are preferably located on the distribution apparatus (e.g. manual controls like buttons, wheels, touch-screen etc.). Setting the volume may however also be carried out remotely (e.g. via a computer that communicates with the distribution apparatus).

After determining from the first and second temperature values the volume of the liquid in the container the fixed relationship between the nominal volume set via the controls and the volume of liquid actually transferred into and/or out of the distribution apparatus is optionally changed. In particular it is adjusted so that the nominal volume and the transferred volume correspond more closely to one another. For this purpose said relationship (or the physical means that determine said relationship, e.g. a fastener like a screw) is preferably unfixed, changed and then again fixed.

According to a preferred embodiment of the invention the calibration method comprises as steps one or more actions which have been described in the form of capabilities and/or characteristics of the calibration system or of parts thereof. Summing up a few preferred features in the form of the following example may serve to illustrate the functioning of the invention:

The measurements may be made with a single cavity (container) or any array of cavities suitable for the liquid handling apparatus (sample distribution apparatus), to be calibrated. An array may consist of cavities of different geometry which are optimized to measure a certain type of volume. Thermal interaction between cavities has to be reduced to a minimum by e.g. using different types of materials, thermal insulation between wells etc. The cavity is filled with an unknown volume (nominal volume) of a liquid with known properties (temperature, density, heat capacity). The cavity is then heated with a defined pulse of energy. Subsequently, the thermal response of the cavity is measured. From the thermal response, the volume can be calculated. The volume may be calculated from the relative change in the signal. The calculation may also be based on the first or higher order derivative of the sensor signal, or of the integral of the sensor signal and / or the 2nd and 3rd power of the integral. Alternatively, the cavity may be heated to a defined temperature, then the liquid is added and the temperature change is monitored. The adding of liquid may include a mixing or shaking step in order to homogenize temperature in the cavity. The measurement cavities life may be limited by derating of heaters and sensors. The system may therefore be divided in a part with "unlimited" reusability and a part with limited reusability. The part with limited reusability may include a cycle counter which counts how many times said part has already been used so that the required precision of a calibration can be guaranteed. The data between calibration tool and user interface (e.g. personal computer, tablet pc, smartphone) may be transferred via cable (e.g. USB) or wireless (e.g. Bluetooth). The control measurement part (control unit) may also include a battery to allow mobile use in a laboratory, e.g. direct measurement on a liquid handling robot.

The method may also be more broadly described as a method for calibrating a sample distribution apparatus for distribution of liquid samples, comprising the steps of
- transferring a volume of liquid from the sample distribution apparatus to a container equipped with a temperature sensor,
- changing the temperature of the liquid in the container,
- measuring a temperature value via the temperature sensor, and
- determining from the temperature value the volume of the liquid in the container.

Preferably, the method comprises the steps of
- transferring a volume of liquid from the sample distribution apparatus to a container equipped with a temperature sensor,
- measuring a first parameter,
- changing the temperature of the liquid in the container,
- measuring a second parameter, and
- determining from the measured first and second parameters (i.e. the measured values) the volume of the liquid in the container.

According to this embodiment, the second parameter is the temperature value mentioned above which is measured via the temperature sensor and the first parameter is a reference value. The reference value characterizes the measured temperature value and/ or relates the measured temperature value to the state of the liquid before its temperature was changed. The first parameter may for example be time (e.g. the time elapsed between an event - like the activation or deactivation of the heater - and the measurement of the said temperature value) or it may be another temperature value preferably measured via the temperature sensor (corresponding to the example with a first and a second measured temperature value described above).

It is further preferred that determining from the one or more temperature values the volume of the liquid in the container comprises comparing the said one or more temperature values to one or more stored temperature values which preferably are characterized by the same reference value and/or for which the volume of liquid is known.

### BRIEF DESCRIPTION OF THE DRAWINGS

- Fig. 1: depicts a first embodiment of a container (schematic; longitudinal section);
- Fig. 2: shows a second embodiment of a container, partially made of a material with high thermal conductivity (schematic; longitudinal section);
- Fig. 3: illustrates two examples of arrays, each with a plurality of containers that are firmly attached to one another (schematic; top view);
- Fig. 4a/b: each includes two graphs showing the heating pulse emitted by the heater and the resulting resistance change in the temperature sensor respectively; and
- Fig.5: shows a calibration system.

### DETAILED DESCRIPTION OF THE DRAWINGS

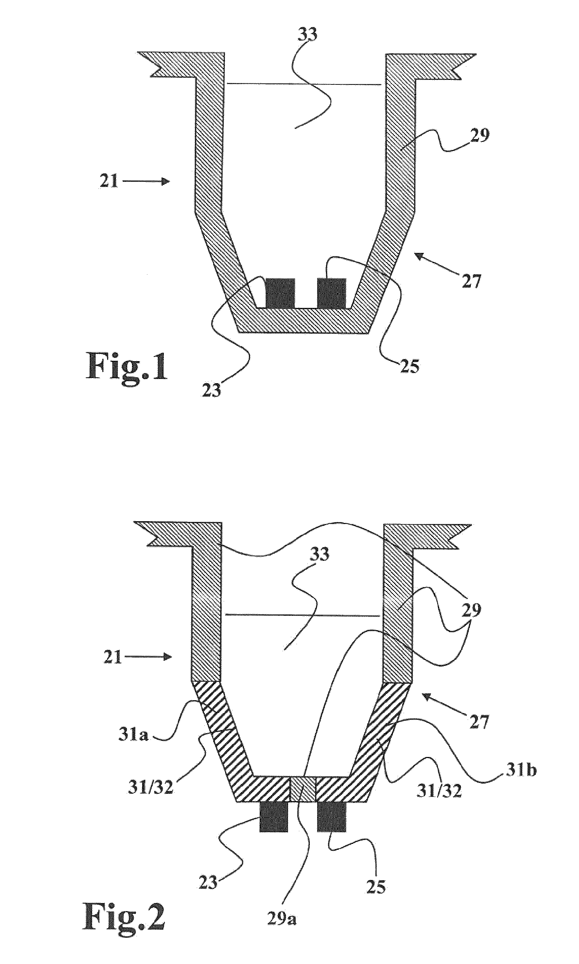

Fig.1 and 2 both show embodiments of a container 21 for a calibration system having a wall 27 that encloses a space for holding a volume of liquid 33 as well as a heater 23 and a temperature sensor 25. For measuring the volume of liquid 33 present in the container 21 heat is emitted by the heater 23 and the liquid 33 is thus heated. The temperature of the liquid 33 is monitored by the temperature sensor 25 which can be any suitable sensor known to the skilled person. In particular, the temperature sensor 25 can be a measuring instrument that is capable of measuring a physical quantity that is directly or indirectly dependent on the temperature the measuring instrument is exposed to (e.g. a resistor measuring resistance R, or electrodes for measuring the electrical conductivity of the liquid, or a sensor for measuring the thermal conductivity of the liquid etc.). The word "temperature" can thus mean "temperature" and/or any physical quantity directly or indirectly dependant on temperature. How the output of the temperature sensor is processed is secondary. The volume of the liquid 33 can be determined from the change in temperature measured by the sensor 25. For example, the temperature sensor could be a resistor since resistance depends on temperature. Thus the temperature and/or temperature change over time can be measured via the resistor (see example of Fig.4a/b). From the measured resistance value(s) the volume of liquid can then be calculated (e.g. by comparing them to stored resistance values for which the volume of liquid is known).

The two containers 21 of Fig.1 and Fig.2 differ in that the wall 27 of the container 21 shown in Fig.1 is wholly made of material 29 with a low thermal conductivity and that the heater 23 and the temperature sensor 25 are arranged inside of the container 21, preferably at or on the inner surface of the wall 27. In contrast, the container according to Fig.2 has a wall 27 made of two different materials one 29 having a low thermal conductivity and the other 31 having a high thermal conductivity. The expression "low thermal conductivity" in this context is to be understood to indicate a thermal conductivity that is lower than the thermal conductivity of the material with "high thermal conductivity". Preferably, a low thermal conductivity is below 10, 2, 0.3, or 0.1 W/ (m*K) while a high thermal conductivity lies above 1, 10, or 100 W/ (m*K). The material 31 with high thermal conductivity can be made of metal, e.g. copper, or aluminum, or plastic filled with a material of high thermal conductivity, preferably in the form of a powder (e.g, a metal powder like alumina). The material 29 with low thermal conductivity can be made of plastic, e.g. PE, PP, PS, PET or PVC, wherein PS (polystyrene) is of particular interest. The material 29 with low thermal conductivity prevents or reduces heat loss from and heat introduction into the liquid 33 within the container 21. If a plurality of containers 21 are connected to one another (e.g. in the form of a container array 37 as shown in Fig.3) it is preferred that they be connected via such material with low thermal conductivity to avoid or reduce heat transfer from one container to another. The material 31 with high thermal conductivity serves as a thermal bridge 32 between the heater 23 and the liquid 33 and/or between the temperature sensor 25 and the liquid 33. The thermal bridge 32 provides a path of higher thermal conductivity than the area surrounding the thermal bridge 32, in particular a thermal conductivity that is at least 2, 5 or 10 times as high as the thermal conductivity of the surrounding area. In Fig.2, the heater 23 is in contact with a first part 31a of the wall 27 while the temperature sensor 25 is in contact with a second part 31b of the wall 27. Both, the first and second parts 31a, 31b are in contact with the liquid 33. Since 31a, 31b are made of a material 31 with high thermal conductivity they serve as thermal bridges 32 between liquid 33 and heater 23 and between liquid 33 and temperature sensor 25 respectively. Furthermore, the two parts 31a, 31b are preferably (but not necessarily) separated from each other by a third part 29a of the wall 27 made of a material 29 with low thermal conductivity. Since the liquid in the container has a higher thermal conductivity than the said third part 29a of the wall 27, the heat produced by the heater 23 will predominantly pass from the first part 31a through the liquid 33 to reach the second part 31b of the wall in contact with the temperature sensor 25 and ultimately the sensor 25 itself. More generally - and also encompassing the embodiment of Fig.1 and other embodiments - it can be said that the heater 23 and the temperature sensor 25 are separated from each other and that the liquid 33 in the container 21 constitutes a bridge or a section of the bridge between the heater 23 and the temperature sensor 25. It is preferred (but not absolutely necessary), that this bridge (i.e. the liquid 33 or the bridge of which the liquid 33 constitutes a section) constitutes a thermal bridge and/or has a higher thermal conductivity than all alternative bridges between the heater 23 and the temperature sensor 25. Consequently, most (preferably at least 95, 90, 80, 70 or 60 percent) of the heat emitted by the heater 23 which reaches the temperature sensor 25 travels through the liquid 33. As a result, the amount of heat necessary to effect a change of temperature in the liquid 33 is reduced. Heat bridges 32 (also called "extensions" in the specification above), e.g. in the form of the described first and second parts 31a, 31b of the wall 27, can be used to increase the surface area of the heater 23 and/or the temperature sensor 25 in contact with the liquid. This improves the heat transfer from the heater 23 to the liquid 33 and from the liquid 33 to the temperature sensor 25 respectively. Independent of the design of the heat bridges 32 it is preferred that the heat bridge 32 in contact with the heater 23 and/or the heat bridge 32 in contact with the temperature sensor 25 has a surface wherein at least 50, 60, 70, or 80 percent of the surface is in contact with the liquid 33. One example of how this could be achieved is by making them extend into the space for holding a volume of liquid 33 (for example in the form of rods or slabs; not shown).

In Fig.3 two different container arrays 37 are shown which are made up of a plurality of containers 21 firmly attached to each other. The containers 21 are preferably arranged in one or more parallel rows. Such container arrays 37 allow for a calibration of pipettors with several release channels and/or to achieve a more accurate calibration by transferring from a single release channel the same nominal volume of liquid to different containers 21 for measurement of the liquid volume. Each container 21 may be equipped with its own temperature sensor and preferably also with its own heater. However, it is also possible to provide two or more containers 21 with a single heater for jointly heating the contents of the two or more containers. Preferably, container arrays 37 are provided in the form of microtiter plates wherein individual wells of said microtiter plates constitute individual containers 21. Such container arrays 37 may be reusable.

Fig.4a and b each shows two graphs. The upper graph depicts the heating power as a function of time. The total amount of heat (energy 63; area under the curve) emitted by a single heater during the course of a single measurement of a liquid volume is preferably at least 0.5, 1, 3, or 5 Joules and/ or at most 200, 100, 50, or 10 Joules. It is further preferred that the heat is emitted in the form of one or more pulses 61 as shown in the upper graph of Fig.4, wherein one pulse has a preferred length of less than 10, 5 or 2 seconds. The lower graph of Fig.4a/b depicts (as a function of time) the effect of the emitted heat on the temperature of the volume of liquid in a container. In the example a resistor is used as a temperature sensor. Resistance is a physical quantity that is dependent on the temperature the resistor is exposed to; a resistor is thus a suitable temperature sensor. In this context it should be mentioned that the absolute resistance measured varies with the start temperature of the container. In the example, temperature is measured in the form of a resistance value wherein a data processing unit compares each measured resistance value (R) to a base resistance value (R₀) to obtain a difference value (ΔR; wherein ΔR = Ro - R) that represents the change in resistance. The lower graphs of Fig.4a and b respectively contain three curves of which each is based on a different set of data points. The curve with the highest maximum represents the data points obtained through a measurement of the temperature change over time effected by a heat pulse 61 of defined energy 63 using an empty container. The two other curves represent the results of measurements using two different volumes of liquid (VolX and VolY, wherein VolY > VolX). The energy 63 of the applied heat pulse 61 is the same for all measurements to ensure comparability. Unsurprisingly, there is an inverse relationship between the measured temperature and the volume of liquid. The (maximum) temperature and thus the (maximum) change in resistance is smaller for larger volumes of liquid if the emitted amount of heat is constant. Determining the peak value of each curve (as shown in Fig.4a), i.e. the maximum value of the measured temperatures and of the change in resistance respectively, is one option for determining the volume of liquid. This is shown in the lower graph of Fig.4a. Alternatively, the temperature after a predefined time (for example 20 or 30 seconds) may be measured starting from the moment the heater is switched on or off (as shown in Fig.4b). Independent of the method used the temperature of the liquid and/or the container before the beginning of the measurement and calibration respectively is preferably the ambient temperature. Besides the above mentioned characteristics (cf. Fig.4a/b) other characteristics of the sets of data points are however also usable (e.g. comparing temperature values at a fixed point in time; calculating the first or second derivative for the functions underlying the curves and comparing values at a fixed point in time or determining their peak value and comparing those etc.). Whatever characteristic or value is used for measurement, it is useful to have a set of reference values (being of the same nature, e.g. same physical quantity as the measured values or derived thereof, e.g. difference values) stored so that the measured value can be compared to the stored set of reference values. Since for the stored reference values the underlying parameters (e.g. selected from: volume of liquid, energy of heat pulse, length of heat pulse, ambient temperature, geometry or volume of the container and/or any other parameter) are known the values measured using the same parameters can be compared to the stored references values to determine the volume transferred from the distribution apparatus to the container.

Fig.5 shows an embodiment of the calibration system 11 according to the invention. The calibration system 11 comprises a calibration tool 41 which is connected via a link 53 (e.g. wireless or wired connection) to a user interface 51 (e.g. a personal computer or a hand held electronic device). The calibration tool 41 comprises a container array 37 which is connected via a link 45 (e.g. wireless or wired connection) to a control unit 43. The described links 45, 53 are capable of transmitting information, preferably in the form of signals (e.g. analog or digital) or data (e.g. in the form of files). The plurality of temperature sensors and the one or more heaters of the container array 37 are addressed by (and thus connected via) a circuit, in particular a multiplexing circuit. The container array 37 or the control unit 43 is preferably equipped with a storage device. Such a storage device may be used to store information on the heater(s) and temperature sensors and/or information on the past use of the container array 37 (e.g. its history).

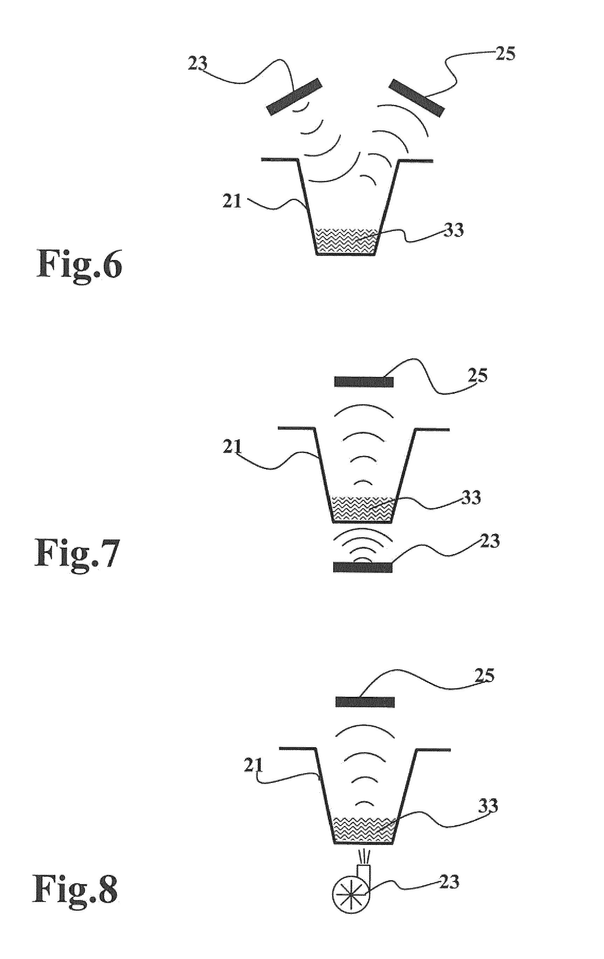

Fig.6, 7 and 8 show different kinds of heaters and different arrangements thereof. The container 21 and/or the liquid 33 may be heated by irradiation with e.g. electromagnetic waves as shown in Fig.6 and 7, in particular with radiation in the infrared spectrum. The embodiments of Fig.6 and 7 differ only in the positioning of the heater 23 and temperature sensor 25. In Fig.6 both are positioned above the opening of the container 21. In Fig.7 the heater 23 is positioned below the container 21, i.e. opposite the opening of the container 21, while the temperature sensor 25 is again located above the container 21. A heater 23 emitting electromagnetic radiation may for example be a semiconductor diode. In order to maximize absorption of the energy emitted by the heater 23, the bottom of the container 21 may be covered with a coating with an absorption spectrum matching the emission spectrum of the heater 23. Alternatively, the substance used for construction of the container 21 may contain additives increasing the absorption of the energy radiated by the heater 23 (as compared to a substance without such additives). It is also possible to tune the radiation wavelength emitted by the heater 23 in order to match the natural absorption spectrum of the substance used for the construction of the container 21. Alternatively or additionally, the liquid 33 may contain additives with an absorption spectrum matching the emission spectrum of the heater 23. However, it is also possible to tune the radiation wavelength emitted by the heater 23 in order to match the natural absorption spectrum of the liquid 33. The "coating" or the "additives" mentioned above may have the features described in the specification of this application for the "material" in the context of increasing absorption of energy.

The embodiment shown in Fig.8 comprises as a heater 23 a convection heating element 23, for example one that blows heated air towards the container 21. The geometry of the bottom of the container 21 may be optimized in order to achieve uniform energy transfer to a container array comprising several such containers 21.

### NOMENCLATURE

- 11: calibration system
- 21: container
- 23: heater
- 25: temperature sensor
- 27: wall
- 29: material with low thermal conductivity
- 29a: third part of the wall (separating first and second parts)
- 31: material with high thermal conductivity
- 31a: first part of the wall (in contact with heater)
- 31b: second part of the wall (in contact with temperature sensor)
- 32: thermal bridge
- 33: liquid
- 37: container array
- 41: calibration tool
- 43: control unit
- 45: link
- 51: user interface
- 53: link
- 61: pulse
- 63: energy

## Claims

1. A method for calibrating a sample distribution apparatus for distribution of liquid samples, in particular a hand held pipettor or a pipetting robot, comprising the steps of
- transferring a volume of liquid from the sample distribution apparatus to a container with a temperature sensor,
- measuring a first temperature value via the temperature sensor,
- changing the temperature of the liquid in the container,
- measuring a second temperature value via the temperature sensor,
- determining from the first and second temperature values the volume of the liquid in the container.

2. The method of claim 1, wherein
- in addition to the temperature sensor the container is equipped with a heater for heating the volume of liquid, and
- the step of changing the temperature of the liquid in the container comprises increasing the temperature of the liquid in the container via the heater.

3. The method of claim 2, further comprising emitting via the heater a defined amount of energy in the form of heat, thereby increasing the temperature of the liquid in the container, wherein
- the amount of heat emitted is 0.5 to 200 J, preferably 1 to 100 J and most preferably 2 to 50 J, and
- the heat is preferably emitted as a pulse having a length of less than 10, 5 or 2 seconds.

4. The method of one of claims 1 to 3, wherein
- the volume of liquid transferred from the sample distribution apparatus to the container is 0.1 to 5000 micro liters, preferably 50 to 1000 micro liters.

5. The method of one of claims 1 to 4, wherein
- in addition to the container one or more similar containers are provided,
- the steps of the method are performed for the container and for one or more of the similar containers,
- the container and the said one or more similar containers are preferably arranged in fixed positions relative to each other, preferably in the form of receptacles of a micro titer plate.

6. The method of claim 5, wherein
- the sample distribution apparatus comprises one or more release channels,
- each of the one or more release channels is adapted for holding a volume of liquid,
- two or more volumes of liquid are transferred from one or more of the release channels to two or more separate containers, and
- the steps of the method for determining the volume are performed in respect of the two or more volumes of liquid present in the two or more containers.

7. The method of one of claim 1 to 6, wherein the time interval
- between the onset of the changing of the temperature of the liquid in the container or between the measurement of the first temperature value,
- and the measurement of the second temperature value
is measured and the method comprises determining from the first and second temperature values and the time interval the volume of the liquid in the container.

8. A calibration system for carrying out the method according to one of claims 1 to 7.

9. The calibration system of claim 8 for calibrating a sample distribution apparatus for distribution of liquid samples, in particular a hand held pipettor or a pipetting robot, the system comprising
- a container, adapted for holding a volume of liquid, the container being equipped with a temperature sensor and a means for changing the temperature of the volume of liquid.

10. The calibration system of claim 9, further comprising the sample distribution apparatus, wherein
- the sample distribution apparatus is adapted for holding and transferring the volume of liquid to the container,
- the sample distribution apparatus comprises one or more release channels, and
- each of the one or more release channels is adapted for holding the volume of liquid.

11. The calibration system of one of claims 9 to 10, wherein
- the means for changing the temperature of the volume of liquid is a heater for increasing the temperature of the volume of liquid.

12. The calibration system of claim 11, wherein the heater is adapted for
- emitting a defined amount of energy in the form of heat, for increasing the temperature of the liquid in the container, and
- emitting the defined amount of heat as a pulse of 0.5 to 200 J, preferably 1 to 100 J and most preferably 2 to 50 J, and/or as a pulse having a length of less than 10, 5 or 3 seconds.

13. The calibration system of one of claims 9 to 12, wherein
- the container has a volume of less than 6 milliliters, preferably less than 1, 0.3 or 0.1 milliliters.

14. The calibration system of one of claims 9 to 13, further comprising
- in addition to the container one or more similar containers,
- wherein the container and the said one or more similar containers are preferably arranged in fixed positions relative to each other, preferably in the form of receptacles of a micro titer plate.

15. The calibration system of one of claims 9 to 14, further comprising a microprocessor which is
- connected or connectable to and adapted for controlling the means for changing the temperature of the volume of liquid within the container, and/or
- connected or connectable to and adapted for processing the signals of the temperature sensor.
